# EUROPEAN PATENT APPLICATION

(11) **EP 4 664 808 A1**
(43) Date of publication of application: **17.12.2025**
(21) Application number: 23920554.5
(22) Date of filing: 10.02.2023
(51) Int. Cl.: H04L 5/00

(54) **TRACKING REFERENCE SIGNAL (TRS) CONFIGURATION METHOD, AND APPARATUS THEREFOR**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2023/075541
(87) International publication number: WO 2024/164347

(57) **Abstract**

Disclosed in the embodiments of the present application are a TRS configuration method, and an apparatus therefor, which can be applied to a communication system. The method comprises: sending to a terminal device TRS configuration information, which is used for indicating M configured TRS bursts, wherein the M TRS bursts comprise periodic TRS bursts and/or aperiodic TRS bursts, there is a time interval of at least one time unit between adjacent TRS bursts, and M is an integer greater than or equal to 2. By means of rationally configuring TRS resources for the terminal device, the terminal device can accurately determine a TDCP on the basis of the rationally configured TRS resources. Moreover, a certain time interval is set between adjacent TRS bursts, such that overheads of the TRS resources can be reduced, and the accuracy of TDCP measurement can be improved.

## Description

### FIELD

The present application relates to the field of communication technology, and in particular to a method and an apparatus for configuring a tracking reference signal (TRS).

### BACKGROUND

For a medium-to-high-speed mobile terminal device, also referred to as a user equipment (UE), the UE may perform channel estimation based on a tracking reference signal (TRS) resource, and then determine a time domain channel property (TDCP) of the UE based on the estimated channel, and report it to the network device. For UEs in medium-to-high-speed mobile scenarios, in order to obtain the accurate TDCP of the UE, it is necessary to configure TRS resources reasonably.

### SUMMARY

Embodiments of the present application provide a method and an apparatus for configuring a TRS, which may be applied to the communication field, and a network device may reasonably configure TRS resources for a terminal device, so that a TDCP of a UE may be accurately determined. Moreover, by reasonably configuring TRS resources, the overhead of TRS resources may be reduced.

In a first aspect, embodiments of the present application provide a method for configuring a tracking reference signal (TRS), which includes:
transmitting TRS configuration information to a terminal device, in which the TRS configuration information is used to indicate configured M TRS bursts, the M TRS bursts include a periodic TRS burst and/or an aperiodic TRS burst, a time interval of at least one time unit exists between adjacent TRS bursts, and M is an integer greater than or equal to 2.

In the technical solution, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

In a second aspect, embodiments of the present application provide another method for configuring a tracking reference signal (TRS), which includes:
receiving TRS configuration information transmitted by a network device; and
determining M TRS bursts according to the TRS configuration information, in which the M TRS bursts include a periodic TRS burst and an aperiodic TRS burst, a time interval of at least one time unit exists between adjacent TRS bursts, and M is an integer greater than or equal to 2.

In a third aspect, embodiments of the present application provide a communication device, and the communication device has part or all of functions for implementing the network device in the method of the first aspect. For example, the functions of the communication device can have functions in part or all of embodiments of the present application, and can also have functions for separately implementing any one of embodiments of the present application. The functions can be implemented through hardware or by executing corresponding software through hardware. The hardware or software includes one or more units or modules corresponding to the functions.

In an implementation, the communication device may include in structure a transceiver module and a processing module, and the processing module is configured to support the communication device to perform the corresponding functions in the method described above. The transceiver module is configured to support communication between the communication device and other devices. The communication device may further include a storage module, and the storage module is configured to couple with the transceiver module and the processing module, which stores the computer program and data necessary for the communication device.

As an example, the processing module may be a processor, the transceiver module may be a transceiver or communication interface, and the storage module may be a memory.

In a fourth aspect, embodiments of the present application provide another communication device, and the communication device has part or all of functions for implementing the terminal device in the method examples of the second aspect. For example, the functions of the communication device can have functions in part or all of embodiments of the present application, and can also have functions for separately implementing any one of embodiments of the present application. The functions can be implemented through hardware or by executing corresponding software through hardware. The hardware or software includes one or more units or modules corresponding to the functions.

In an implementation, the communication device may include in structure a transceiver module and a processing module, and the processing module is configured to support the communication device to perform the corresponding functions in the method described above. The transceiver module is configured to support communication between the communication device and other devices. The communication device may further include a storage module, and the storage module is configured to couple with the transceiver module and the processing module, which stores the computer program and data necessary for the communication device.

In a fifth aspect, embodiments of the present application provide a communication device including a processor, and the processor invokes a computer program stored in a memory to perform the method of the first aspect described above.

In a sixth aspect, embodiments of the present application provide a communication device including a processor, and the processor invokes a computer program stored in a memory to perform the method of the second aspect described above.

In a seventh aspect, embodiments of the present application provide a communication device including a processor and a memory storing a computer program; and the processor executes the computer program stored in the memory to cause the communication device to perform the method of the first aspect described above.

In an eighth aspect, embodiments of the present application provide a communication device including a processor and a memory storing a computer program; and the processor executes the computer program stored in the memory to cause the communication device to perform the method of the second aspect described above.

In a ninth aspect, embodiments of the present application provide a communication device including a processor and an interface circuit configured to receive code instructions and transmit the code instructions to the processor, and the processor is configured to run the code instructions to cause the device to perform the method of the first aspect described above.

In a tenth aspect, embodiments of the present application provide a communication device including a processor and an interface circuit configured to receive code instructions and transmit the code instructions to the processor, and the processor is configured to run the code instructions to cause the device to perform the method of the second aspect described above.

In an eleventh aspect, embodiments of the present application provide a system for configuring a tracking reference signal (TRS). The system includes a communication device of the third aspect and a communication device of the fourth aspect, or the system includes a communication device of the fifth aspect and a communication device of the sixth aspect, or the system includes a communication device of the seventh aspect and a communication device of the eighth aspect, or the system includes a communication device of the ninth aspect and the communication device of the tenth aspect.

In a twelfth aspect, embodiments of the present disclosure provide a computer-readable storage medium configured to store instructions for use by the network device, and when the instructions are executed, the network device is caused to perform the method of the first aspect described above.

In a thirteenth aspect, embodiments of the present disclosure provide a computer-readable storage medium configured to store instructions for use by the terminal device, and when the instructions are executed, the terminal device is caused to perform the method of the second aspect described above.

In a fourteenth aspect, the present application further provides a computer program product including a computer program that, when run on a computer, causes the computer to perform the method in the first aspect described above.

In a fifteenth aspect, the present application further provides a computer program product including a computer program that, when run on a computer, causes the computer to perform the method in the second aspect described above.

In a sixteenth aspect, the present application provides a chip system including at least one processor and an interface configured to support the network device to implement the functions involved in the first aspect, for example, determining or processing at least one of the data and information involved in the method described above. In a possible design, the chip system further includes a memory, and the memory is configured to store a computer program and data necessary for the network device. The chip system may be composed of a chip or may include a chip and other discrete devices.

In a seventeenth aspect, the present application provides a chip system including at least one processor and an interface configured to support the terminal device to implement the functions involved in the second aspect, for example, determining or processing at least one of the data and information involved in the method described above. In a possible design, the chip system further includes a memory, and the memory is configured to store a computer program and data necessary for the terminal device. The chip system may be composed of a chip or may include a chip and other discrete devices.

In an eighteenth aspect, the present application provides a computer program that, when run on a computer, causes the computer to perform the method of the first aspect described above.

In a nineteenth aspect, the present application provides a computer program that, when run on a computer, causes the computer to perform the method of the second aspect described above.

### BRIEF DESCRIPTION OF THE DRAWINGS

In order to more clearly illustrate the technical solutions in the embodiments or background art of the present application, the accompanying drawings to be used in the embodiments or background art of the present application are described below.
FIG. 1 is a schematic diagram of an architecture of a communication system provided by an embodiment of the present application;
FIG. 2 is a flowchart of a method for configuring a tracking reference signal (TRS) provided by an embodiment of the present application;
FIG. 2a is a schematic diagram of a time domain structure of a TRS burst provided by an embodiment of the present application;
FIG. 2b is a schematic diagram of a time domain structure of a TRS burst provided by an embodiment of the present application;
FIG. 2c is a schematic diagram of a time domain structure of a TRS burst provided by an embodiment of the present application;
FIG. 2d is a schematic diagram of a time domain structure of a TRS burst provided by an embodiment of the present application;
FIG. 3 is a flowchart of another method for configuring a tracking reference signal (TRS) provided by an embodiment of the present application;
FIG. 3a is a schematic diagram of a configuration of a TRS burst provided by an embodiment of the present application;
FIG. 4 is a flowchart of another method for configuring a tracking reference signal (TRS) provided by an embodiment of the present application;
FIG. 5 is a flowchart of another method for configuring a tracking reference signal (TRS) provided by an embodiment of the present application;
FIG. 5a is a schematic diagram of a configuration of a TRS burst provided by an embodiment of the present application;
FIG. 6 is a flowchart of another method for configuring a tracking reference signal (TRS) provided by an embodiment of the present application;
FIG. 7 is a flowchart of another method for configuring a tracking reference signal (TRS) provided by an embodiment of the present application;
FIG. 8 is a schematic diagram of another configuration of a TRS provided by an embodiment of the present application;
FIG. 9 is a schematic diagram of another configuration of a TRS provided by an embodiment of the present application;
FIG. 10 is a flowchart of another method for configuring a tracking reference signal (TRS) provided by an embodiment of the present application;
FIG. 11 is a flowchart of another method for configuring a tracking reference signal (TRS) provided by an embodiment of the present application;
FIG. 12 is a flowchart of another method for configuring a tracking reference signal (TRS) provided by an embodiment of the present application;
FIG. 13 is a flowchart of another method for configuring a tracking reference signal (TRS) provided by an embodiment of the present application;
FIG. 14 is a flowchart of another method for configuring a tracking reference signal (TRS) provided by an embodiment of the present application;
FIG. 15 is a block diagram of a communication device provided by an embodiment of the present application;
FIG. 16 is a block diagram of a communication device provided by an embodiment of the present application; and
FIG. 17 is a block diagram of a chip provided by an embodiment of the present application.

### DETAILED DESCRIPTION

Illustrative embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with the present disclosure. On the contrary, they are merely examples of a device and a method consistent with some aspects of the present disclosure, as elaborated in the appended claims.

The terms used in the embodiments of the present disclosure are only for purpose of description of particular embodiments, and are not intended to limit the embodiments of the present disclosure. The singular form "a" and "the" used in embodiments of the present disclosure and the appended claims is also intended to include the plural form, unless other meanings are explicitly expressed in the context. It should be understood that the term "and/or" used herein refers to and includes any or all of possible combinations of one or a plurality of listed related items.

It should be understood that, although the terms "first", "second", "third" may be employed by embodiments of the present disclosure to describe various information, these information should not limited by these terms. These terms are only used to distinguish the information of the same type from each other. For example, first information may be referred to as second information without departing from the scope of the embodiments of the present disclosure, and similarly, the second information may also be referred to as the first information. Depending on the context, the word "if" used herein may be interpreted as "when...", "upon..." or "in response to determination". For the sake of simplicity and ease of understanding, the terms "greater than" or "less than" and "higher than" or "lower than" are used herein to describe size relationships. However, it could be understood to those skilled in the art that the term "greater than" also encompasses the meaning of "greater than or equal to", and "less than" also encompasses the meaning of "less than or equal to"; the term "higher than" encompasses the meaning of "higher than or equal to" and "lower than" also encompasses the meaning of "lower than or equal to".

For ease of understanding, the terms involved in the present application are first introduced.

According to a time domain structure design of a tracking reference signal (TRS), for FR1, a higher layer may configure a CSI-RS resource set including four periodic CSI-RS resources to a UE within one TRS period, and the CSI-RS resources included in the CSI-RS resource set may be referred to as TRS resources. These four resources are distributed in two consecutive slots, each slot contains two periodic TRS resources, the CSI-RS resources in the two slots have the same location in the time domain, and each TRS resource corresponds to one OFDM symbol. For FR1, each slot contains 14 OFDM symbols, and a time domain location of a TRS resource in one slot is selected from the following options: *l* ∈ {4,8}, *l* ∈ {₅,9}, or l ∈ {6,10}, *l* representing an index of a OFDM symbol where the TRS resource is located. Note that a starting location of *l* is from 0. The TRS period may be configured as 10 ms, 20 ms, 40 ms, and 80 ms. The TRS resource may be configured as a periodic TRS resource and an aperiodic TRS resource, and the time domain location of the periodic TRS resource and the time domain location of the aperiodic TRS resource may be identical or different.

In order to better understand a method for configuring a TRS disclosed in embodiments of the present application, a communication system applicable to embodiments of the present application is first described below.

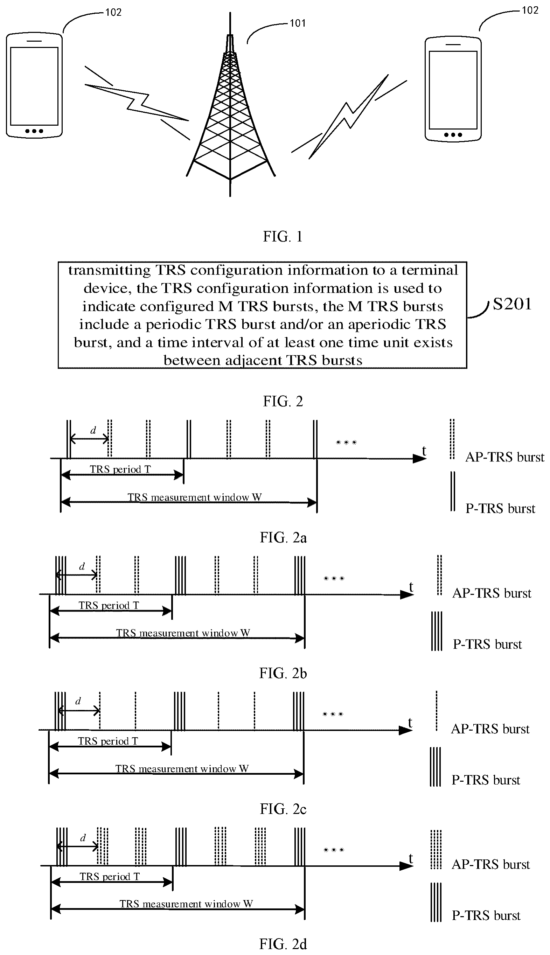

Referring to FIG. **1,** FIG. 1 is a schematic diagram of an architecture of a communication system provided by an embodiment of the present application. The communication system may include, but is not limited to, a network device and a terminal device, and the number and form of the devices shown in FIG. 1 are for illustrative purposes only and do not constitute a limitation of the embodiments of the present application, which may include two or more network devices and two or more terminal devices in practical applications. For example, the communication system illustrated in FIG. 1 includes one first network device 101 and one terminal device 102.

It should be noted that the technical solutions of the embodiments of the present application can be applied to various communication systems, e.g., third generation (3G) universal mobile telecommunications systems (UMTSs), long term evolution (LTE) systems, fifth generation (5G) mobile communication systems, 5G new radio (NR) systems, sixth generation (6G) mobile communication systems, or other future new mobile communication systems.

The network device 101 in embodiments of the present application is an entity on the network side used to transmit or receive signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi) system, among others. Embodiments of the present application do not limit the specific technology and the specific device form used for the network device. The network device provided by embodiments of the present application may be composed of a centralized unit (CU) and a distributed unit (DU), in which the CU may also be referred to as a control Unit, and the use of the CU-DU structure may split the protocol layer of the network device, such as a base station. Some of the protocol layer functions are placed in the CU for centralized control, and some or all of the remaining protocol layer functions are distributed in the DU, which is centrally controlled by the CU.

The terminal device 102 in embodiments of the present application is an entity on the user side used to receive or transmit signals, such as a mobile phone. The terminal device can also be referred to as a terminal, user equipment (UE), mobile station (MS), mobile terminal (MT) and so on. The terminal device may be a vehicle with communication function, a smart vehicle, a mobile phone, a wearable device, a tablet computer (Pad), a computer with wireless transceiving function, a virtual reality (VR) terminal device, an augmented reality (AR) terminal device, a wireless terminal device for industrial control, a wireless terminal device for self-driving, a wireless terminal device for remote medical surgery, a wireless terminal device for smart grid, a wireless terminal device for transportation safety, a wireless terminal device for smart city, a wireless terminal device for smart home, and so on. The embodiments of the present application do not limit the specific technology and the specific device form used for the terminal device.

It may be understood that the communication system described in embodiments of the present application is intended to more clearly illustrate the technical solutions of the embodiments of the present application, and does not constitute a limitation on the technical solutions provided by the embodiments of the present application, and a person of ordinary skill in the art may know that, with the evolution of the system architecture and the emergence of new business scenarios, the technical solutions provided by the embodiments of the present application are equally applicable to similar technical problems.

It should be noted that the method for configuring the TRS provided in any one of embodiments of the present application may be performed alone, or may be performed together with possible implementation methods in other embodiments, or may be performed together with any one of the technical solutions in the related art.

A method and an apparatus for configuring a tracking reference signal (TRS) provided in the present application are described in detail below in conjunction with the accompanying drawings.

Referring to FIG. 2, FIG. 2 is a flowchart of a method for configuring a tracking reference signal (TRS) provided by an embodiment of the present application. The method for configuring the TRS may be performed by a network device. As illustrated in FIG. 2, the method may include but is not limited to following steps.

In S201, TRS configuration information is transmitted to a terminal device, in which the TRS configuration information is used to indicate configured M TRS bursts, the M TRS bursts include a periodic TRS burst and/or an aperiodic TRS burst, and a time interval of at least one time unit exists between adjacent TRS bursts.

M is an integer greater than or equal to 2.

In some implementations, the time unit may be a slot, a symbol, a subframe, etc. In the following embodiments of the present application, a configuration process of the TRS burst is explained by taking the time unit as a slot as an example.

In some implementations, the M TRS bursts include a periodic TRS burst (P-TRS burst) and/or an aperiodic TRS burst (AP-TRS burst). Optionally, the M TRS bursts may include M periodic TRS bursts only; optionally, the M TRS bursts may include M aperiodic TRS bursts only; optionally, the M TRS bursts may include N periodic TRS bursts and M-N aperiodic TRS bursts, where N is an integer greater than or equal to 1, and N ≤ M.

It should be noted that each TRS burst may include a channel-state-information reference signal (CSI-RS) resource, and the CSI-RS resource included in the TRS burst may be referred to as a TRS resource in the present application, and the description is applicable to the subsequent embodiments. The number of TRS resources included in the TRS burst may be configured by the network device or agreed by a protocol.

It should be noted that the time interval between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

In some implementations, the periodic TRS burst and the aperiodic TRS burst each include one slot, where one or two TRS resources are transmitted on each slot, optionally one TRS resource may be transmitted on each slot, or two TRS resources may be transmitted on each slot. The two TRS resources on the same slot are spaced by a set number of orthogonal frequency division multiplexing (OFDM) symbols. As illustrated in FIG. 2a, the periodic TRS burst and the aperiodic TRS burst each include one slot, and two TRS resources are transmitted on each slot. It could be understood that FIG. 2a is merely an example here, and cannot be used as a condition to limit the present application. For example, the periodic TRS burst and the aperiodic TRS burst each include one slot, and one TRS resource is transmitted on each slot.

In some other implementations, one of the periodic TRS burst and the aperiodic TRS includes one slot, the other of the periodic TRS burst and the aperiodic TRS includes two slots, and one or two TRS resources are transmitted on each slot. Optionally, the number of the TRS resources transmitted on the slots of different TRS bursts may be identical. For example, one TRS resource may be transmitted on each slot, or two TRS resources may be transmitted on each slot. Optionally, the number of TRS resources transmitted on the slots of different TRS bursts may also be different. In a case where two TRS resources are transmitted on a slot, the two TRS resources on the slot are spaced by a set number of OFDM symbols.

As illustrated in FIG. 2b, the periodic TRS burst may include two slots, and the aperiodic TRS burst may include one slot, where two TRS resources are transmitted on the slot corresponding to the aperiodic TRS burst, four TRS resources are transmitted on the two slots corresponding to the periodic TRS burst, and two TRS resources are transmitted on each slot.

As illustrated in FIG. 2c, the periodic TRS burst may include two slots, and the aperiodic TRS burst may include one slot, where one TRS resource is transmitted on the slot corresponding to the aperiodic TRS burst; four TRS resources are transmitted on the two slots corresponding to the periodic TRS burst, and two TRS resources are transmitted on each slot.

It could be understood that FIG. 2b is merely an example here, and is not intended to be a condition to limit the present application. For example, two TRS resources may be transmitted on the slot corresponding to the aperiodic TRS burst, and one TRS resource may be transmitted on the slot corresponding to the periodic TRS burst. For another example, the periodic TRS burst may include one slot, and the aperiodic TRS burst may include two slots.

In some other implementations, the periodic TRS burst and the aperiodic TRS burst each include two slots, two TRS resources are transmitted on the TRS burst, and the two TRS resources are spaced by a set number of OFDM symbols, as illustrated in FIG. 2d.

In some implementations, the M TRS bursts may be uniformly configured for the terminal device, that is, time intervals between the M TRS bursts are configured to be identical. By way of example, the time interval of the i-th TRS burst and the (i+1)-th TRS burst may be configured as d slots. Where d is an integer greater than or equal to 1, and i is an integer greater than or equal to 0.

After the network device uniformly configures the M TRS bursts, the network device may generate TRS configuration information based on the above configuration and transmit the TRS configuration information to the terminal device. The TRS configuration information may indicate to the terminal device that the time intervals of the M TRS bursts are identical and/or a value of the time interval between two adjacent TRS bursts.

In some other implementations, the M TRS bursts may be non-uniformly configured for the terminal device, that is, time intervals between at least part of the M TRS bursts are different.

Optionally, the time intervals between adjacent TRS bursts among the M TRS bursts are all different. For example, the time interval between the i-th TRS burst and the (i+1)-th TRS burst is dᵢ, while the time interval between the (i+1)-th TRS burst and the (i+2)-th TRS burst is dⱼ. Where dᵢ and dⱼ are an integer greater than or equal to 1, and i is an integer greater than or equal to 0.

Optionally, the time interval for the first to N₁-th of the M TRS bursts is d₁ time units (slots); the time interval for (N₁+1)-th to N₂-th TRS bursts of the M TRS bursts is d₂ time units (slots), and so on. Where d₁ and d₂ are an integer greater than or equal to 1.

After the network device non-uniformly configures the M TRS bursts, the network device may generate TRS configuration information based on the above configuration and transmit the TRS configuration information to the terminal device. The TRS configuration information may indicate to the terminal device that the time intervals of the M TRS bursts are different and/or a value of the time interval between two adjacent TRS bursts.

In some implementations, the M TRS bursts may be TRS bursts within one TRS measurement window. The TRS measurement window includes a starting point and a measurement length of the measurement window, and the starting point and the measurement length of the measurement window may be predefined or network-configured. For example, the first slot in one period is predefined as the starting point of the window.

In some implementations, the M TRS bursts may be uniformly or non-uniformly configured within the TRS measurement window in accordance with the manner described above.

It should be noted that the number of time units of an interval between adjacent TRS bursts, that is, the time interval between adjacent TRS bursts may be configured by the network or may be agreed by a protocol.

Further, the terminal device may perform channel estimation based on the M TRS bursts, and determine an accurate TDCP and report it to the network device. The network device determines, based on the TDCP of the UE, which codebook of Type I and Type II is used as precoding for data transmission; alternatively, the network device configures an SRS transmission period value based on SRS channel reciprocity in accordance with the TDCP of the UE; alternatively, the network device performs CSI prediction in the TDD system based on the TDCP of the UE.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

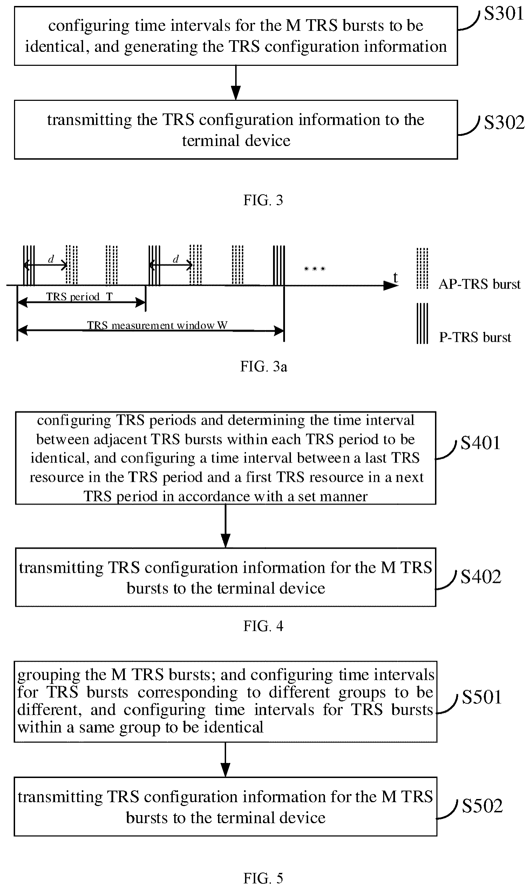

Referring to FIG. 3, FIG. 3 is a flowchart of a method for configuring a tracking reference signal (TRS) provided by an embodiment of the present application. The method for configuring the TRS may be performed by a network device. As illustrated in FIG. 3, the method may include but is not limited to following steps.

In S301, time intervals for the M TRS bursts are configured to be identical, and TRS configuration information is generated.

The M TRS bursts include a periodic TRS burst and/or an aperiodic TRS burst, and a time interval of at least one time unit exists between adjacent TRS bursts. M is an integer greater than or equal to 2.

In some implementations, the M periodic TRS bursts and/or aperiodic TRS bursts are uniformly configured in the time domain, that is, time intervals between the M TRS bursts are configured to be identical.

Regarding the time domain structural forms of the periodic TRS burst and the aperiodic TRS burst, reference may be made to the related contents of the embodiments described above such as the description of step S201, which will not be repeated here.

In some implementations, the M TRS bursts may be TRS bursts within one TRS measurement window, and the M TRS bursts within the TRS measurement window may be uniformly configured. Optionally, the TRS measurement window may include one or more TRS periods, and the M TRS bursts may be uniformly configured according to the TRS periods. Taking TRS burst and/or aperiodic TRS burst including two slots, with two TRS resources transmitted on each slot as an example, as illustrated in FIG. 3a, the time interval of the i-th TRS burst and the (i+1)-th TRS burst may be configured as d slots. Where d is an integer greater than or equal to 1, and i is an integer greater than or equal to 0.

In S302, the TRS configuration information is transmitted to the terminal device.

After the network device uniformly configures the M TRS bursts, the network device may generate TRS configuration information based on the above configuration and transmit the TRS configuration information to the terminal device. The TRS configuration information may indicate to the terminal device that the time intervals of the M TRS bursts are identical and/or a value of the time interval between two adjacent TRS bursts.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

Referring to FIG. 4, FIG. 4 is a flowchart of a method for configuring a tracking reference signal (TRS) provided by an embodiment of the present application. The method for configuring the TRS may be performed by a network device. As illustrated in FIG. 4, the method may include but is not limited to following steps.

S401, a TRS period is configured and the time interval between adjacent TRS bursts within each TRS period is determined to be identical, and a time interval between a last TRS resource in the TRS period and a first TRS resource in a next TRS period is configured in accordance with a set manner.

In some implementations, a plurality of TRS periods may be configured for the M TRS bursts, and a TRS burst and/or an aperiodic TRS burst may be included in each TRS period. The network device configures an identical time interval for TRS bursts within each TRS period. Further, the time interval between a last TRS resource in the TRS period and a first TRS resource in a next TRS period is configured in accordance with a set manner. It could be understood that the last TRS resource in the TRS period may be a periodic TRS resource or an aperiodic TRS resource. The first TRS resource in the next TRS period may be a periodic TRS resource or an aperiodic TRS resource.

Optionally, configuring a time interval between the last TRS resource in the TRS period and the first TRS resource in the next TRS period in accordance with the set manner includes:
determining time intervals of adjacent TRS resources within the TRS period, optionally, configured by the network or agreed by a protocol.

In the case of the time interval set in the TRS period, the maximum number of TRS bursts allowed to be transmitted within the TRS period is determined. Further, the total number of slots included within the TRS period is determined, and the network device configures the time interval between the last TRS resource in the TRS period and the first TRS resource in the next TRS period according to the maximum number of TRS bursts allowed to be transmitted within the TRS period, the total number of slots included in the TRS period, and a value of the time interval corresponding to the TRS period.

For example, X represents the maximum number of TRS bursts allowed to be transmitted within one TRS period when the set time interval is d, and P represents the total number of slots included in the TRS period. In embodiments of the present application, the time interval between the first X periodic TRS bursts and the aperiodic TRS burst within each TRS period is d, and the interval between the last TRS resource in the TRS period and the TRS resource in the next period is P-2X-(X-1) d.

In some implementations, the M TRS bursts may be TRS bursts within one TRS measurement window, the TRS measurement window may include a plurality of TRS periods, the time interval between adjacent TRS bursts within each TRS period is identical, and the interval between the last TRS resource in the TRS period and the first TRS resource interval in the next TRS period is P-2X-(X-1) d.

In S402, the TRS configuration information for the M TRS bursts is transmitted to the terminal device.

After the network device uniformly configures the M TRS bursts, the network device may generate TRS configuration information based on a configuration of the step S401 described above, and transmit the TRS configuration information to the terminal device. The TRS configuration information may indicate to the terminal device that the M TRS bursts are configured in accordance with the TRS periods, the time interval between TRS bursts within each TRS period is identical, but the time interval between the last TRS resource in the TRS period and the first TRS resource in the next TRS period is configured in accordance with a set manner.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

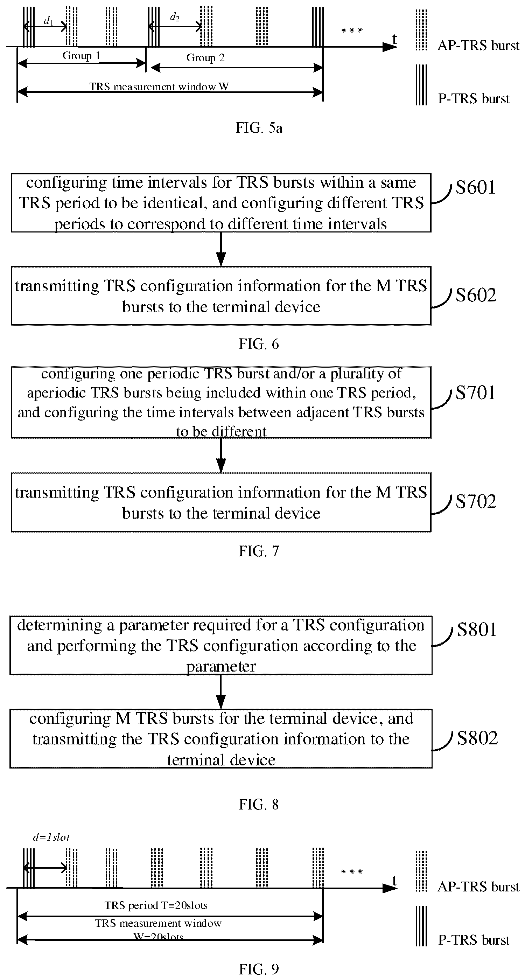

Referring to FIG. 5, FIG. 5 is a flowchart of a method for configuring a tracking reference signal (TRS) provided by an embodiment of the present application. The method for configuring the TRS may be performed by a network device. As illustrated in FIG. 5, the method may include but is not limited to following steps.

In S501, grouping of M TRS bursts is performed, time intervals for TRS bursts corresponding to different groups are configured to be different, and time intervals for TRS bursts within the same group are configured to be identical.

The M TRS bursts include a periodic TRS burst and/or an aperiodic TRS burst, and a time interval of at least one time unit exists between adjacent TRS bursts. M is an integer greater than or equal to 2.

Regarding the time domain structural forms of the periodic TRS burst and the aperiodic TRS burst, reference may be made to the related contents of the embodiments described above such as the description of step S201, which will not be repeated here.

In some implementations, the M TRS bursts may be TRS bursts within one TRS measurement window, and the M TRS bursts within the TRS measurement window may be configured in groups.

In some implementations, the M TRS bursts may be divided into N groups, where the time interval of TRS bursts within a first group is d₁; the time interval of TRS bursts within a second group is d₂, ..., the time interval of TRS bursts within a j-th group is dⱼ, ..., the time interval of TRS bursts of an N-th group is d_{N}. In embodiments of the present application, the time interval of TRS bursts in each group is the time interval corresponding to the group, and the time interval of TRS bursts in the j-th group is dⱼ, ..., the time interval of the TRS bursts in the N-th group is d_{N}. Where dⱼ is an integer greater than or equal to 1, 1≤j≤N, N is a positive integer, and N≤M. As illustrated in FIG. 5a, the M TRS bursts are TRS bursts within the TRS measurement window, which may be divided into two groups, where the time intervals of adjacent TRS bursts in the first group 1 are all d₁; the time intervals of adjacent TRS bursts in the second group are all d₂.

By way of example, the first to N1-th TRS bursts are taken as the first group, and the time interval for the first to N₁-th TRS bursts is configured as d₁; the (N1-1)-th to N2-th TRS bursts are taken as the second group, and the time interval for the (N1-1)-th to N2-th TRS bursts is configured as d2, and so on.

In S502, the TRS configuration information for the M TRS bursts is transmitted to the terminal device.

After the network device non-uniformly configures the M TRS bursts, the network device may generate TRS configuration information based on a configuration of the step S501 described above, and transmit the TRS configuration information to the terminal device. The TRS configuration information may indicate to the terminal device that the M TRS bursts are configured in groups, the time intervals between TRS bursts within each group are identical, and the time interval corresponding to each group is different.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Furthermore, setting a certain time interval between adjacent TRS bursts may reduce TRS resource overhead, avoid signal interference due to over-configuration of TRS bursts, and further improve the accuracy of TDCP measurement and data transmission in the network.

Referring to FIG. 6, FIG. 6 is a flowchart of a method for configuring a tracking reference signal (TRS) provided by an embodiment of the present application. The method for configuring the TRS may be performed by a network device. As illustrated in FIG. 6, the method may include but is not limited to following steps.

In S601, time intervals between adjacent TRS bursts within the same TRS period are configured to be identical, and different TRS periods are configured to correspond to different time intervals.

The M TRS bursts include a periodic TRS burst and/or an aperiodic TRS burst, and a time interval of at least one time unit exists between adjacent TRS bursts. M is an integer greater than or equal to 2.

Regarding the time domain structural forms of the periodic TRS burst and the aperiodic TRS burst, reference may be made to the related contents of the embodiments described above such as the description of step S201, which will not be repeated here.

Optionally, a plurality of TRS periods may be configured for the M TRS bursts, the periodic TRS burst and/or the aperiodic TRS burst are included in the TRS period, and the network device may non-uniformly configure the M TRS bursts in accordance with the TRS periods. Optionally, the M TRS bursts may be TRS bursts within TRS measurement window, and the M TRS bursts may be non-uniformly configured in accordance with the TRS periods.

In some implementations, L TRS periods may be configured for the M TRS bursts, and each TRS period may correspond to a different time interval of TRS bursts, for example, the time interval of TRS bursts corresponding to the first TRS period may be d₁, the time interval of TRS bursts corresponding to the second TRS period may be d₂;......, the time interval of TRS bursts within *l*-th TRS period is d*ₗ*, ..., the time interval of TRS bursts corresponding to the L-th TRS period is d_{L}. It should be noted that the time intervals of TRS bursts corresponding to different TRS periods are different, and the time interval of TRS bursts corresponding to *l*-th TRS period is different from the time interval of TRS bursts corresponding to q-th TRS period. Where d*ₗ* is an integer greater than or equal to 1, 1<*l*, *q*≤N, L is a positive integer, and L≤M.

In some other implementations, L TRS periods may be configured for the M TRS bursts, and the time intervals of TRS bursts corresponding to part of the TRS periods are identical, but the time intervals between parts of the TRS periods are different. For example, the time intervals of TRS bursts corresponding to the previous N TRS periods among the L TRS periods are all d₁, while the time intervals of TRS bursts corresponding to the next L-N TRS periods are all d₂, but d₁ and d₂ are different. That is, the TRS bursts within the previous N TRS periods achieve the uniform configuration in accordance with d₁, and the TRS bursts within the next L-N TRS periods achieve the uniform configuration in accordance with d₂. In embodiments of the present application, the TRS bursts are uniformly configured within the same TRS period, but M TRS bursts are non-uniformly configured in the time domain.

In some other implementations, L TRS periods may be configured for the M TRS bursts, each TRS period may correspond to a different time interval of TRS bursts, but the time interval between a last TRS resource in each TRS period and a first TRS resource in a next TRS period is configured in accordance with a set manner. It could be understood that the last TRS resource in the TRS period may be a periodic TRS resource or an aperiodic TRS resource. The first TRS resource in the next TRS period may be a periodic TRS resource or an aperiodic TRS resource.

Regarding detailed introduction of the set manner, reference may be made to the related contents of the embodiments described above such as the description of step S401, which will not be repeated here.

In some implementations, the M TRS bursts may be TRS bursts within one TRS measurement window, L TRS periods may be included in the TRS measurement window, each TRS period may correspond to a different time interval of TRS bursts, but the time interval between a last TRS resource in each TRS period and a first TRS resource in a next TRS period is configured in accordance with a set manner.

By way of example, P is the total number of slots included in a TRS period. In a case where the time interval is d₁, X represents a maximum number of TRS bursts allowed to be transmitted within one TRS period. The time interval for TRS bursts within the previous N TRS periods is d₁, and the interval between the last TRS resource in the TRS period and a first TRS resource in the next period is P-2X-(X-1)d₁. In a case where the time interval is d₂, Y represents a maximum number of TRS bursts allowed to be transmitted within one TRS period. The time interval of TRS bursts within the next L-N TRS periods is d₂, and the interval between the last TRS resource in the TRS period and a first TRS resource in the next TRS period is P-2Y-(Y-1)d₂.

In S602, the TRS configuration information for the M TRS bursts is transmitted to the terminal device.

After the network device non-uniformly configures the M TRS bursts, the network device may generate TRS configuration information based on a configuration of the step S601 described above, and transmit the TRS configuration information to the terminal device. The TRS configuration information may indicate to the terminal device that the M TRS bursts are configured in groups, the time intervals between TRS bursts within each group are identical, and the time interval corresponding to each group is different.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Furthermore, setting a certain time interval between adjacent TRS bursts may reduce TRS resource overhead, avoid signal interference due to over-configuration of TRS bursts, and further improve the accuracy of TDCP measurement and data transmission in the network.

Referring to FIG. 7, FIG. 7 is a flowchart of a method for configuring a tracking reference signal (TRS) provided by an embodiment of the present application. The method for configuring the TRS may be performed by a network device. As illustrated in FIG. 7, the method may include but is not limited to following steps.

In S701, one periodic TRS burst and/or a plurality of aperiodic TRS bursts are configured to be included within one TRS period, and the time intervals between adjacent TRS bursts are configured to be different.

The M TRS bursts include a periodic TRS burst and/or an aperiodic TRS burst, and a time interval of at least one time unit exists between adjacent TRS bursts. M is an integer greater than or equal to 2.

Regarding the time domain structural forms of the periodic TRS burst and the aperiodic TRS burst, reference may be made to the related contents of the embodiments described above such as the description of step S201, which will not be repeated here.

In some implementations, one periodic TRS burst and K aperiodic TRS periods are included in one TRS period, and K is an integer greater than or equal to 1. The time interval of two adjacent TRS bursts among the periodic TRS burst and/or the K aperiodic TRS bursts is dᵢ, optionally the time interval dᵢ may be configured by the network, or agreed by the protocol. That is, the time intervals between adjacent TRS bursts within the same TRS period are also different.

In some implementations, the M TRS bursts may be TRS bursts within one TRS measurement window, L TRS periods may be included in the TRS measurement window, one periodic TRS burst and/or a plurality of aperiodic TRS bursts are included within each TRS period, and the time intervals between adjacent TRS bursts within the same period are also different.

In S702, the TRS configuration information for the M TRS bursts is transmitted to the terminal device.

After the network device non-uniformly configures the M TRS bursts, the network device may generate TRS configuration information based on a configuration of the step S701 described above, and transmit the TRS configuration information to the terminal device. The TRS configuration information may indicate to the terminal device that M TRS bursts are configured periodically, the time intervals between adjacent TRS bursts within the same TRS period are identical, and TRS periods of different locations correspond to different time intervals.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

Referring to FIG. 8, FIG. 8 is a flowchart of a method for configuring a tracking reference signal (TRS) provided by an embodiment of the present application. The method for configuring the TRS may be performed by a network device. As illustrated in FIG. 8, the method may include but is not limited to following steps.

In S801, a parameter required for a TRS configuration is determined and the TRS configuration is performed according to the parameter required for the TRS configuration.

The parameter required for the TRS configuration includes at least one of: a time interval between adjacent TRS bursts, a number of slots occupied by a TRS measurement window, a starting point of the TRS measurement window, and a total number of TRS bursts within the TRS measurement window.

Optionally, the parameter required for the TRS configuration may be determined in one of the following manners.

In some implementations, the parameter required for the TRS configuration may be determined by the network device.

In some other implementations, the network device may receive indication information transmitted by a terminal device, and the indication information is used to indicate the parameter required for the TRS configuration.

In some other implementations, one part of the parameters required for the TRS configuration is determined by the network device, and the other part of the parameters is indicated by the terminal device.

In some other implementations, the network device transmits a first TRS burst for parameter measurement to the terminal device in advance, and receives a time domain channel property (TDCP) reported by the terminal device based on the first TRS burst, and determines the parameter required for the TRS configuration according to the TDCP.

Optionally, the terminal device may perform channel estimation based on the measured TRS burst, and further, the terminal device determines its own time domain channel property (TDCP) based on the estimated channel information, and reports it to the network device, and the network device determines the parameter required for the TRS configuration according to the TDCP. The TDCP reported by the terminal device includes at least one of the following information:
the terminal device reports a difference between a maximum Doppler offset value and a minimum Doppler offset value corresponding to different transmission delay paths;
the terminal device reports Doppler offset values corresponding to M strongest peaks in a broadband Doppler spectrum, M = 1, 2, 3... as parameters configured by the network side; or
the terminal device reports amplitude values of channel autocorrelation over different time intervals.

In S802, M TRS bursts are configured for the terminal device, and TRS configuration information is transmitted to the terminal device.

The TRS configuration information is used to indicate configured M TRS bursts, M TRS bursts include a periodic TRS burst and/or an aperiodic TRS burst, and a time interval of at least one time unit exists between adjacent TRS bursts.

In embodiments of the present disclosure, implementations of the step S802 may be realized in any manner of the embodiments of the present application, which is not limited and not repeated here.

Further, the terminal device may perform channel estimation again based on the M TRS bursts, and determine an accurate TDCP and report it to the network device. The network device determines, based on the TDCP of the UE, which codebook of Type I and Type II is used as precoding for data transmission; alternatively, the network device configures an SRS transmission period value based on SRS channel reciprocity in accordance with the TDCP of the UE; alternatively, the network device performs CSI prediction in the TDD system based on the TDCP of the UE.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

On the basis of the above embodiments, as illustrated in FIG. 9, the network device configures that a TRS period T = 20 slots, a length W of the TRS measurement window = 20 slots, and a time interval d between two adjacent TRS bursts = 1 slot, that is, the TRS bursts within the TRS measurement window are uniformly configured. The time interval refers to a distance between the first slot in one TRS burst and the first slot in a next adjacent TRS burst. For one TRS burst, the network device configures a CSI-RS resource set including four periodic TRS resources for the terminal device (e.g., the UE), these four resources are distributed in two consecutive slots, each slot contains two periodic CSI- RS resources, and the CSI-RS resources in the two slots have the same location in the time domain, and each CSI- RS resource corresponds to one OFDM symbol. Each periodic TRS burst or aperiodic TRS burst includes four TRS resources transmitted on two consecutive slots, there are two TRS resources in each slot, and the time domain location interval of the two TRS resources is 4 OFDM symbols. The network device configures seven TRS bursts for the UE within one TRS measurement window, and the UE may perform channel estimation based on the TRS resources corresponding to the seven TRS bursts, and then determine the TDCP of the UE, and report the TDCP to the network device. The network device determines, based on the TDCP of the UE, which codebook of Type I and Type II is used as precoding for data transmission; alternatively, the network device configures a sounding reference signal (SRS) transmission period value based on the SRS channel reciprocity in accordance with the TDCP of the UE; alternatively, the network device performs CSI prediction in the TDD system based on the TDCP of the UE.

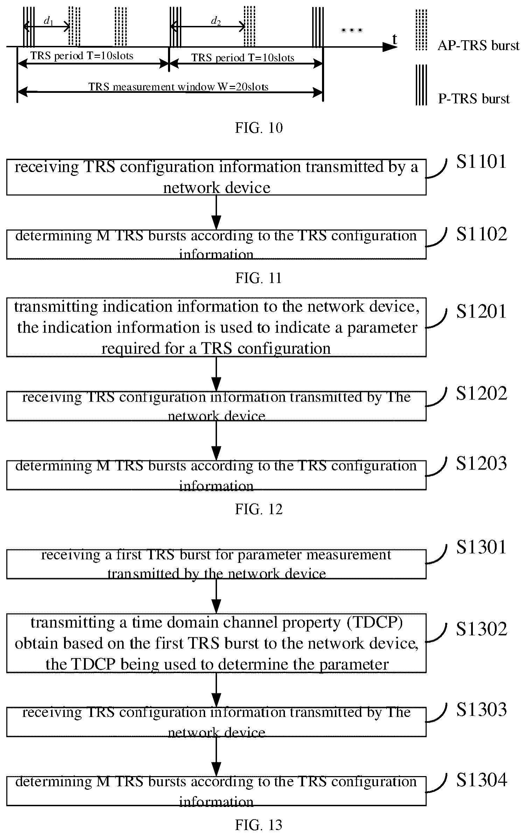

On the basis of the above embodiments, as illustrated in FIG. 10, the network side configures that a TRS period T = 10 slots, a length W of the TRS measurement window = 20 slots, an interval of two adjacent TRS bursts within the first period d1 = 1 slot, and an interval of two adjacent TRS bursts within the second period d2 = 2 slots. That is to say, the TRS bursts within the TRS measurement window are configured non-uniformly. The TRS bursts within the same TRS period is uniformly configured. The network device may configure six TRS bursts for the UE within one TRS measurement window. The UE may perform channel estimation based on the TRS resources corresponding to the six TRS bursts, and then determine the TDCP of the UE, and report the TDCP to the network device. The network device determines, based on the TDCP of the UE, which codebook of Type I and Type II is used as precoding for data transmission; alternatively, the network device configures an SRS transmission period value based on SRS channel reciprocity in accordance with the TDCP of the UE; alternatively, the network device performs CSI prediction in the TDD system based on the TDCP of the UE.

Referring to FIG. 11, FIG. 11 is a flowchart of a method for configuring a tracking reference signal (TRS) provided by an embodiment of the present application. The method for configuring the TRS may be performed by a terminal device. As illustrated in FIG. 11, the method may include but is not limited to following steps.

In S1101, TRS configuration information transmitted by a network device is received.

In embodiments of the present application, the network device may configure the M TRS bursts for the terminal device, generate the TRS configuration information after completion of the configuration and transmit the TRS configuration information to the terminal device. Accordingly, the terminal device may receive the TRS configuration information transmitted by the network device.

In S1102, M TRS bursts are determined according to the TRS configuration information.

The M TRS bursts configured to the terminal device by the network device include a periodic TRS burst and/or an aperiodic TRS burst, a time interval of at least one time unit exists between adjacent TRS bursts, and M is an integer greater than or equal to 2.

In some implementations, the M TRS bursts include a periodic TRS burst and/or an aperiodic TRS burst. Optionally, the M TRS bursts may include M periodic TRS bursts only; optionally, the M TRS bursts may include M aperiodic TRS bursts only; optionally, the M TRS bursts may include N periodic TRS bursts and M-N aperiodic TRS bursts, where N is an integer greater than or equal to 1, and N ≤ M.

It should be noted that each TRS burst may include a TRS resource, and the number of TRS resources included in the TRS burst may be configured by the network device or agreed by a protocol.

It should be noted that the time interval between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

In some implementations, the periodic TRS burst and the aperiodic TRS burst each include one slot, where one or two TRS resources are transmitted on each slot, optionally one TRS resource may be transmitted on each slot, or two TRS resources may be transmitted on each slot. The two TRS resources on the same slot are spaced by a set number of OFDM symbols, as illustrated in FIG. 2a.

In some other implementations, one of the periodic TRS burst and the aperiodic TRS includes one slot, the other of the periodic TRS burst and the aperiodic TRS includes two slots, and one or two TRS resources are transmitted on each slot. Optionally, the number of the TRS resources transmitted on the slots of different TRS bursts may be identical. For example, one TRS resource may be transmitted on each slot, or two TRS resources may be transmitted on each slot. Optionally, the number of TRS resources transmitted on the slots of different TRS bursts may also be different. In a case where two TRS resources are transmitted on a slot, the two TRS resources on the slot are spaced by a set number of OFDM symbols, as illustrated in FIGS. 2b and 2c.

In some other implementations, the periodic TRS burst and the aperiodic TRS burst each include two slots, two TRS resources are transmitted on the TRS burst, and the two TRS resources are spaced by a set number of OFDM symbols, as illustrated in FIG. 2d.

In some implementations, the terminal device may determine the M TRS bursts configured by the network device for the terminal device and/or the time interval between adjacent TRS bursts among the M TRS bursts according to the received TRS configuration information, and then determine the location of the TRS burst in the time domain.

In some implementations, the network device may uniformly configure the M TRS bursts for the terminal device, that is, configuring time intervals between the M TRS bursts to be identical. Accordingly, the terminal device may determine that the time intervals between the M TRS bursts are identical according to the received TRS configuration information.

In some other implementations, the network device may non-uniformly configure the M TRS bursts for the terminal device, that is, time intervals between at least part of the M TRS bursts are different. Accordingly, the terminal device determines that the M TRS bursts may be non-uniformly configured according to the received TRS configuration information, for example, time intervals between at least part of the M TRS bursts are different.

Optionally, the time intervals between adjacent TRS bursts of the M TRS bursts are different.

Optionally, the time interval for the first to N₁-th TRS bursts of the M TRS bursts is d₁ slots; the time interval for (N₁+1)-th to N2-th TRS bursts of the M TRS bursts is d₂ slots, and so on.

In some implementations, the terminal device determines that the M TRS bursts are non-uniformly configured according to the TRS configuration information. In some implementations, the terminal device determines the TRS periods corresponding to the M TRS bursts according to the TRS configuration information, and determines that the time interval between adjacent TRS bursts within each TRS period is identical, and a time interval between a last TRS resource in the TRS period and a first TRS resource in a next TRS period is configured in accordance with a set manner.

In some implementations, the terminal device determines the grouping of the M TRS bursts according to the TRS configuration information, and further determines that time intervals for TRS bursts corresponding to different groups are different, and time intervals for TRS bursts within the same group are identical.

In some implementations, the terminal device determines, according to the TRS configuration information, that time intervals of TRS bursts within the same TRS period are identical, and different TRS periods correspond to different time intervals. That is, the terminal device determines that time intervals between adjacent TRS bursts within the same TRS period are a time interval of the same TRS period, and a time interval between a last TRS resource in the same TRS period and a first TRS resource in a next TRS period is determined in accordance with a set manner.

Optionally, configuring a time interval between a last TRS resource in the TRS period and a first TRS resource in a next TRS period in accordance with a set manner includes:
determining time intervals of adjacent TRS resources within the TRS period, optionally, configured by the network or agreed by a protocol.

In the case of the time interval set in the TRS period, the maximum number of TRS bursts allowed to be transmitted within the TRS period is determined. Further, the total number of slots included within the TRS period is determined, and the network device configures the time interval between the last TRS resource in the TRS period and the first TRS resource in the next TRS period according to the maximum number of TRS bursts allowed to be transmitted within the TRS period, the total number of slots included in the TRS period, and a value of the time interval corresponding to the TRS period.

In some implementations, the terminal device determines, according to the TRS configuration information, that one periodic TRS burst and/or a plurality of aperiodic TRS bursts are included within one TRS period, and the time intervals between adjacent TRS bursts are different.

In some implementations, the M TRS bursts may be TRS bursts within one TRS measurement window. In some implementations, the terminal device determines that the M TRS bursts within the configured TRS measurement window are uniformly or non-uniformly configured according to the TRS configuration information.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Furthermore, setting a certain time interval between adjacent TRS bursts may reduce TRS resource overhead, avoid signal interference due to over-configuration of TRS bursts, and further improve the accuracy of TDCP measurement and data transmission in the network.

Referring to FIG. 12, FIG. 12 is a flowchart of a method for configuring a tracking reference signal (TRS) provided by an embodiment of the present application. The method for configuring the TRS may be performed by a terminal device. As illustrated in FIG. 12, the method may include but is not limited to following steps.

In S1201, indication information is transmitted to the network device, in which the indication information is used to indicate a parameter required for TRS configuration.

The parameter required for the TRS configuration includes at least one of: a time interval between adjacent TRS bursts, a number of time units occupied by a TRS measurement window, a starting point of TRS measurement window, and a total number of TRS bursts within the TRS measurement window.

In a possible implementation, the indication information transmitted by the terminal device is used to indicate one part of the parameters required for TRS configuration, and the other part of the parameters may be configured by the network device or agreed by the protocol.

In S1202, TRS configuration information transmitted by a network device is received.

In embodiments of the present application, the network device may configure the M TRS bursts for the terminal device according to the parameter required for the TRS configuration, and generate the TRS configuration information after completion of the configuration and transmit the TRS configuration information to the terminal device. Accordingly, the terminal device may receive the TRS configuration information transmitted by the network device.

In S1203, M TRS bursts are determined according to the TRS configuration information.

In embodiments of the present disclosure, implementations of the step S1203 may be realized in any manner of the embodiments of the present application, which is not limited and not repeated here.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

Referring to FIG. 13, FIG. 13 is a flowchart of a method for configuring a tracking reference signal (TRS) provided by an embodiment of the present application. The method for configuring the TRS may be performed by a terminal device. As illustrated in FIG. 13, the method may include but is not limited to following steps.

In S1301, a first TRS burst for parameter measurement transmitted by the network device is received.

In S1302, a time domain channel property (TDCP) obtained based on the first TRS burst is transmitted to the network device, the TDCP being used to determine the parameter required for the TRS configuration.

The terminal device may perform channel estimation using the TRS resource corresponding to the first TRS burst, and then determine the TDCP of the UE, and report the TDCP to the network device. The network device determines the parameter required for the TRS configuration based on the reported TDCP.

In S1303, TRS configuration information transmitted by a network device is received.

In embodiments of the present disclosure, implementations of the step S1303 may be realized in any manner of the embodiments of the present application, which is not limited and not repeated here.

In S1304, M TRS bursts are determined according to the TRS configuration information.

In embodiments of the present disclosure, implementations of the step S1304 may be realized in any manner of the embodiments of the present application, which is not limited and not repeated here.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Furthermore, setting a certain time interval between adjacent TRS bursts may reduce TRS resource overhead, avoid signal interference due to over-configuration of TRS bursts, and further improve the accuracy of TDCP measurement and the accuracy of data transmission in the network.

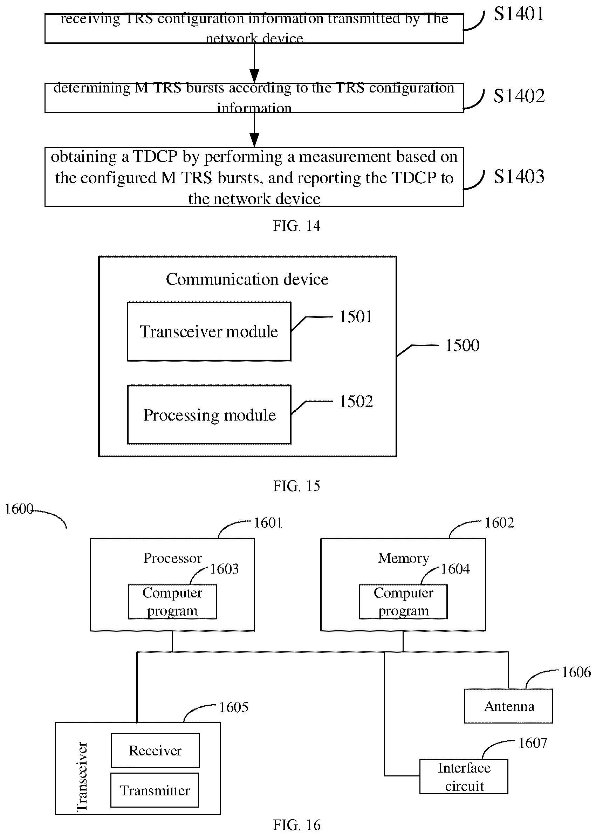

Referring to FIG. 14, FIG. 14 is a flowchart of a method for configuring a tracking reference signal (TRS) provided by an embodiment of the present application. The method for configuring the TRS may be performed by a terminal device. As illustrated in FIG. 14, the method may include but is not limited to following steps.

In S1401, TRS configuration information transmitted by a network device is received.

In embodiments of the present disclosure, implementations of the step S1401 may be realized in any manner of the embodiments of the present application, which is not limited and not repeated here.

In S1402, M TRS bursts are determined according to the TRS configuration information.

In embodiments of the present disclosure, implementations of the step S1401 may be realized in any manner of the embodiments of the present application, which is not limited and not repeated here.

In S1403, a TDCP is obtained by performing a measurement based on the configured M TRS bursts, and the TDCP is reported to the network device.

The terminal device may perform channel estimation based on the M TRS bursts, and determine an accurate TDCP and report it to the network device. The network device determines, based on the TDCP of the UE, which codebook of Type I and Type II is used as precoding for data transmission; alternatively, the network device configures an SRS transmission period value based on SRS channel reciprocity in accordance with the TDCP of the UE; alternatively, the network device performs CSI prediction in the TDD system based on the TDCP of the UE.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

In embodiments provided in the present application described above, the methods provided in embodiments of the present application are described from the perspective of the network device, and the terminal device, respectively. In order to realize each of the functions in the method provided in embodiments of the present disclosure described above, the network device and the terminal device may include a hardware structure, a software module, in the form of a hardware structure, a software module, or a hardware structure plus a software module to realize each of the functions described above. One of the above functions can be performed as a hardware structure, a software module, or a hardware structure plus a software module.

Referring to FIG. 15, a block diagram of a communication device 1500 provided by an embodiment of the present application is illustrated. The communication device 1500 illustrated in FIG. 15 may include a transceiver module 1501 and a processing module 1502. The transceiver module 1501 may include a transmitting module and/or a receiving module, the transmitting module is configured to realize a transmitting function, the receiving module is configured to realize a receiving function, and the transceiver module 1501 may realize a transmitting function and/or a receiving function.

The communication device 1500 may be a network device, a device in the network device, or a device capable of being matched for use with network device. Alternatively, the communication device 1500 may be a terminal device, a device in the terminal device, or a device capable of being matched for use with the terminal device.

The communication device 1500 may be the network device.

The transceiver module 1501 is configured to transmit TRS configuration information to a terminal device, in which the TRS configuration information is used to indicate configured M TRS bursts, the M TRS bursts include a periodic TRS burst and/or an aperiodic TRS burst, a time interval of at least one time unit exists between adjacent TRS bursts, and M is an integer greater than or equal to 2.

In some implementations, the processing module 1502 is configured to configure time intervals for the M TRS bursts to be identical, and generate the TRS configuration information; and
the transceiver module 1501 is further configured to transmit the TRS configuration information to the terminal device.

In some implementations, the processing module 1502 is further configured to configure the M TRS bursts non-uniformly, and generate the TRS configuration information; and
the transceiver module 1501 is further configured to transmit the TRS configuration information to the terminal device.

In some implementations, the processing module 1502 is further configured to configure the M TRS bursts non-uniformly within a TRS measurement window.

In some implementations, the processing module 1502 is further configured to configure the time interval between adjacent TRS bursts within each TRS period to be identical, and configure a time interval between a last TRS resource in the TRS period and a first TRS resource in a next TRS period in accordance with a set manner, in which the periodic TRS burst and/or the aperiodic TRS burst are included within the TRS period, and the TRS burst includes a TRS resource.

In some implementations, the processing module 1502 is further configured to group the M TRS bursts, configure time intervals for TRS bursts corresponding to different groups to be different, and configure time intervals for TRS bursts within the same group to be identical.

In some implementations, the processing module 1502 is further configured to configure time intervals for TRS bursts within the same TRS period to be identical, and configure different TRS periods to correspond to different time intervals, and the periodic TRS burst and/or the aperiodic TRS burst are included within the TRS period.

In some implementations, the processing module 1502 is further configured to configure time intervals between adjacent TRS bursts within the same TRS period to be a time interval of the same TRS period, and configure a time interval between a last TRS resource in the same TRS period and a first TRS resource in a next TRS period in accordance with a set manner, in which the TRS burst includes a TRS resource.

In some implementations, the processing module 1502 is further configured to determine a maximum number of TRS bursts allowed to be transmitted within the TRS period and a total number of time units included in the TRS period, in which the maximum number is a number of TRS bursts allowed to be transmitted within the TRS period under a corresponding set time interval; and
configure the time interval between the last TRS resource in the TRS period and the first TRS resource in the next TRS period according to the total number, the maximum number and a value of the time interval corresponding to the TRS period.

In some implementations, the processing module 1502 is further configured to configure one periodic TRS burst and/or a plurality of aperiodic TRS bursts being included within one TRS period, and configure the time intervals between adjacent TRS bursts to be identical or different.

In some implementations, the periodic TRS burst and the aperiodic TRS burst each include one time unit, one or two TRS resources are transmitted on each time unit, and the two TRS resources are spaced by a set number of orthogonal frequency division multiplexing (OFDM) symbols.

In some implementations, one of the periodic TRS burst and the aperiodic TRS includes one time unit, the other of the periodic TRS burst and the aperiodic TRS includes two time units, one or two TRS resources are transmitted on each time unit, and the two TRS resources are spaced by a set number of OFDM symbols.

In some implementations, the periodic TRS burst and the aperiodic TRS burst each include two time units, two TRS resources are transmitted on each time unit, and the two TRS resources are spaced by a set number of OFDM symbols.

In some implementations, the processing module 1502 is further configured to determine a parameter required for a TRS configuration and perform the TRS configuration according to the parameter.

The parameter includes at least one of: a time interval between TRS bursts, a number of time units occupied by a TRS measurement window, a starting point of the TRS measurement window, and a total number of TRS bursts within the TRS measurement window.

In some implementations, the processing module 1502 is further configured to perform one of determining manners for parameter required for the TRS configuration as follows:
determined by the network device;
receiving indication information transmitted by the terminal device, in which the indication information is used to indicate the parameter; or
one part of the parameters being determined by the network device, and the other part of the parameters being indicated by the terminal device.

In some implementations, the transceiver module 1501 is further configured to transmit a first TRS burst for parameter measurement to the terminal device, and receive a time domain channel property (TDCP) reported by the terminal device based on the first TRS burst.

In some implementations, the processing module 1502 is further configured to determine the parameter according to the TDCP.

In some implementations, a time interval of at least one time unit existing between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

The communication device 1500 is the terminal device.

The transceiver module 1501 is configured to receive TRS configuration information transmitted by a network device; and
a processing module is configured to determine M TRS bursts according to the TRS configuration information, in which the M TRS bursts include a periodic TRS burst and an aperiodic TRS burst, a time interval of at least one time unit exists between adjacent TRS bursts, and M is an integer greater than or equal to 2.

In some implementations, the processing module 1502 is further configured to determine that time intervals for the M TRS bursts are identical according to the TRS configuration information, in which the time interval for the TRS bursts is network-configured or protocol-agreed.

In some implementations, the processing module 1502 is further configured to determine that the M TRS bursts are configured non-uniformly according to the TRS configuration information.

In some implementations, the processing module 1502 is further configured to determine that the M TRS bursts are configured non-uniformly within a TRS measurement window according to the TRS configuration information.

In some implementations, the processing module 1502 is further configured to, according to the TRS configuration information, determine that the time interval between adjacent TRS bursts within each TRS period is identical, and a time interval between a last TRS resource in the TRS period and a first TRS resource in a next TRS period is configured in accordance with a set manner, in which the periodic TRS burst and/or the aperiodic TRS burst are included within the TRS period, and each the TRS burst comprises a TRS resource.

In some implementations, the processing module 1502 is further configured to determine grouping of M TRS bursts according to the TRS configuration information, and determine that time intervals for TRS bursts corresponding to different groups are different, and time intervals for TRS bursts within the same group are identical.

In some implementations, the processing module 1502 is further configured to, according to the TRS configuration information, determine that time intervals for TRS bursts within the same TRS period are identical, and different TRS periods correspond to different time intervals, in which the periodic TRS burst and/or the aperiodic TRS burst are included within the TRS period.

In some implementations, the processing module 1502 is further configured to determine that time intervals between adjacent TRS bursts within the same TRS period to be a time interval corresponding to the same TRS period, and configure a time interval between a last TRS resource in the same TRS period and a first TRS resource in a next TRS period in accordance with a set manner, in which each TRS burst includes a TRS resource.

In some implementations, the processing module 1502 is further configured to:
determine a maximum number of TRS bursts allowed to be transmitted within the TRS period and a total number of time units included in the TRS period, in which the maximum number is a number of TRS bursts allowed to be transmitted within the TRS period under a corresponding set time interval; and
configure the time interval between the last TRS resource in the TRS period and the first TRS resource in the next TRS period according to the total number, the maximum number and a value of the time interval corresponding to the TRS period.

In some implementations, the processing module 1502 is further configured to, according to the TRS configuring information, determine that one periodic TRS burst and/or a plurality of aperiodic TRS bursts are included within one TRS period, and the time intervals between adjacent TRS bursts are different.

In some implementations, the periodic TRS burst and the aperiodic TRS burst each include one time unit, one or two TRS resources are transmitted on each time unit, and the two TRS resources are spaced by a set number of OFDM symbols.

In some implementations, one of the periodic TRS burst and the aperiodic TRS includes one time unit, the other of the periodic TRS burst and the aperiodic TRS includes two time units, one or two TRS resources are transmitted on each time unit, and the two TRS resources are spaced by a set number of OFDM symbols.

In some implementations, the periodic TRS burst and the aperiodic TRS burst each include two time units, two TRS resources are transmitted on each time unit, and the two TRS resources are spaced by a set number of OFDM symbols.

In some implementations, the transceiver module 1501 is further configured to transmit indication information to the network device. The indication information is used to indicate a parameter required for a TRS configuration, and the parameter includes at least one of: a time interval between TRS bursts, a number of time units occupied by a TRS measurement window, a starting point of the TRS measurement window, and a total number of TRS bursts within the TRS measurement window.

In some implementations, the transceiver module 1501 is further configured to receive a first TRS burst for parameter measurement transmitted by the network device, and transmit the time domain channel property (TDCP) obtained based on the first TRS burst to the network device. The TDCP is used to determine the parameter, and the parameter includes at least one of: a time interval between TRS bursts, a number of time units occupied by a TRS measurement window, a starting point of the TRS measurement window, and a total number of TRS bursts within the TRS measurement window.

In some implementations, a time interval of at least one time unit existing between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

In some implementations, the transceiver module 1501 is further configured to obtain a TDCP by performing a measurement based on the configured M TRS bursts, and report the TDCP to the network device.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

Referring to FIG. 16, FIG. 16 is a block diagram of another communication device 1600 provided by an embodiment of the present application. The communication device 1600 may be a network device, a terminal device, a chip, a chip system, or a processor, etc. that supports the network device to realize the above-described method, or a chip, a chip system, or a processor, etc. that supports the terminal device to realize the above-described method. The device may be configured to realize the methods described in the above method embodiments, and the details may be found in the description of the above method embodiments.

The communication device 1600 may include one or more processors 1601. The processor 1601 may be a general purpose processor or a specialized processor, etc. This may be, for example, a baseband processor or a central processor. The baseband processor may be used to process the communication protocol as well as the communication data, and the central processor may be used to control the communication device (e.g., the base station, the baseband chip, the terminal device, the terminal device chip, the DU or the CU, etc.), execute the computer program, and process the data of the computer program.

Optionally, the communication device 1600 may also include one or more memories 1602, on which a computer program 1604 may be stored, and the processor 1601 executes the computer program 1604 to cause the communication device 1600 to perform the method described in the method embodiments described above. Optionally, data may also be stored in the memory 1602. The communication device 1600 and the memory 1602 may be provided separately or may be integrated together.

Optionally, the communication device 1600 may also include a transceiver 1605, and an antenna 1606. The transceiver 1605 may be referred to as a transceiver unit, a transceiver machine, or a transceiver circuit, etc., and is used to implement the transmitting and receiving functions. The transceiver 1605 may include a receiver and a transmitter, the receiver may be referred to as a receiving machine or a receiving circuit, etc., for implementing the receiving function, and the transmitter may be referred to as a transmitting machine or a transmitting circuit, etc., for implementing the transmitting function.

Optionally, the communication device 1600 may also include one or more interface circuits 1607. The interface circuit 1607 is used to receive code instructions and transmit them to the processor 1601. The processor 1601 runs the code instructions to cause the communication device 160 to perform the method described in the method embodiments above.

In an implementation, the processor 1601 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing, or the above transceiver circuit, interface or interface circuit may be used for signal transmission or delivery.

In an implementation, the processor 1601 may store a computer program 1603, and the computer program 1603 running on the processor 1601 may cause the communication device 160 to perform the method described in the method embodiments above. The computer program 1603 may be solidified in the processor 1601, in which case the processor 1601 may be implemented by hardware.

In an implementation, the communication device 1600 may include a circuit, and the circuit may realize the function of transmitting or receiving or communicating in the method embodiments above. The processor and transceiver described in the present application may be implemented on integrated circuits (ICs), analog ICs, radio frequency integrated circuits (RFICs), mixed-signal ICs, application specific integrated circuits (ASICs), printed circuit boards (PCBs), electronic devices, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device, but the scope of the communication device described in the present disclosure is not limited thereto, and the structure of the communication device may not be limited by FIG. 16. The communication device may be a stand-alone device or may be part of a larger device. For example the communication device may be:
(1) a stand-alone integrated circuit IC, or chip, or chip system or subsystem;
(2) a collection having one or more ICs, optionally, the collection of ICs may also include storage components for storing data, computer programs;
(3) ASIC, such as a modem;
(4) a module that can be embedded within other devices;
(5) a receiver, terminal device, smart terminal device, cellular phone, wireless device, handset, mobile unit, in-vehicle device, network device, cloud device, artificial intelligence device, and so on;
(6) Others, etc.

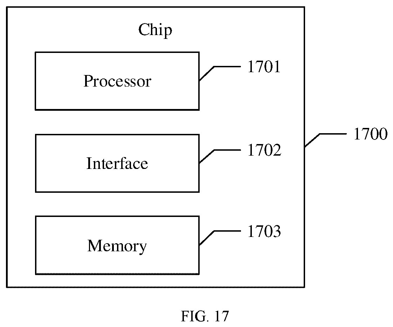

For the case where the communication device may be a chip or a chip system, see the block schematic diagram of the chip illustrated in FIG. 17. The chip illustrated in FIG. 17 includes a processor 1701 and an interface 1702. The number of processors 1701 may be one or more, and the number of interfaces 1702 may be more than one.

For the case where the chip is used to realize the functions of the network device in the embodiments of the present application:

The interface 1702 is configured to transmitting TRS configuration information to a terminal device, in which the TRS configuration information is used to indicate configured M TRS bursts, the M TRS bursts include a periodic TRS burst and/or an aperiodic TRS burst, a time interval of at least one time unit exists between adjacent TRS bursts, and M is an integer greater than or equal to 2.

In some implementations, the processor 1701 is configured to configure time intervals for the M TRS bursts to be identical, and generate the TRS configuration information; and
the interface 1702 is further configured to transmit the TRS configuration information to the terminal device.

In some implementations, the processor 1701 is further configured to configure the M TRS bursts non-uniformly, and generate the TRS configuration information; and
the interface 1702 is further configured to transmit the TRS configuration information to the terminal device.

In some implementations, the processor 1701 is further configured to configure the M TRS bursts non-uniformly within a TRS measurement window.

In some implementations, the processing module 1701 is further configured to configure the time interval between adjacent TRS bursts within each TRS period to be identical, and configure a time interval between a last TRS resource in the TRS period and a first TRS resource in a next TRS period in accordance with a set manner, in which the periodic TRS burst and/or the aperiodic TRS burst are included within the TRS period, and each the TRS burst includes a TRS resource.

In some implementations, the processor 1701 is further configured to group the M TRS bursts, configure time intervals for TRS bursts corresponding to different groups to be different, and configure time intervals for TRS bursts within the same group to be identical.

In some implementations, the processor 1701 is further configured to configure time intervals for TRS bursts within the same TRS period to be identical, and configure different TRS periods to correspond to different time intervals, and the periodic TRS burst and/or the aperiodic TRS burst are included within the TRS period.

In some implementations, the processor 1701 is further configured to configure time intervals between adjacent TRS within the same TRS period to be a time interval of the same TRS period, and configure a time interval between a last TRS resource in the same TRS period and a first TRS resource in a next TRS period in accordance with a set manner, in which each TRS burst includes a TRS resource.

In some implementations, the processor 1701 is further configured to determine a maximum number of TRS bursts allowed to be transmitted within the TRS period and a total number of time units included in the TRS period, in which the maximum number is a number of TRS bursts allowed to be transmitted within the TRS period under a corresponding set time interval; and
configure the time interval between the last TRS resource in the TRS period and the first TRS resource in the next TRS period according to the total number, the maximum number and a value of the time interval corresponding to the TRS period.

In some implementations, the processor 1701 is further configured to configure one periodic TRS burst and/or a plurality of aperiodic TRS bursts being included within one TRS period, and configure the time intervals between adjacent TRS bursts to be identical or different.

In some implementations, the periodic TRS burst and the aperiodic TRS burst each include one time unit, one or two TRS resources are transmitted on each time unit, and the two TRS resources are spaced by a set number of orthogonal frequency division multiplexing (OFDM) symbols.

In some implementations, one of the periodic TRS burst and the aperiodic TRS includes one time unit, the other of the periodic TRS burst and the aperiodic TRS includes two time units, one or two TRS resources are transmitted on each time unit, and the two TRS resources are spaced by a set number of OFDM symbols.

In some implementations, the periodic TRS burst and the aperiodic TRS burst each include two time units, two TRS resources are transmitted on each time unit, and the two TRS resources are spaced by a set number of OFDM symbols.

In some implementations, the processor 1701 is further configured to determine a parameter required for a TRS configuration and perform the TRS configuration according to the parameter.

The parameter includes at least one of: a time interval between TRS bursts, a number of time units occupied by a TRS measurement window, a starting point of the TRS measurement window, and a total number of TRS bursts within the TRS measurement window.

In some implementations, the processor 1701 is further configured to perform one of determining manners for the parameter required for the TRS configuration as follows:
determined by the network device;
receiving indication information transmitted by the terminal device, in which the indication information is used to indicate the parameter; or
one part of the parameters being determined by the network device, and the other part of the parameters being indicated by the terminal device.

In some implementations, the interface 1702 is further configured to transmit a first TRS burst for parameter measurement to the terminal device, and receive a time domain channel property (TDCP) reported by the terminal device based on the first TRS burst.

In some implementations, the processor 1701 is further configured to determine the parameter according to the TDCP.

In some implementations, a time interval of at least one time unit existing between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

For the case where the chip is used to realize the functions of the terminal device in the embodiments of the present application:

The interface 1702 is configured to receive the TRS configuration information transmitted by the network device.

The processing module is configured to determine M TRS bursts according to the TRS configuration information, in which the M TRS bursts include a periodic TRS burst and an aperiodic TRS burst, a time interval of at least one time unit exists between adjacent TRS bursts, and M is an integer greater than or equal to 2.

In some implementations, the processor 1701 is further configured to determine that time intervals for the M TRS bursts are identical according to the TRS configuration information, in which the time interval for the TRS bursts is network-configured or protocol-agreed.

In some implementations, the processor 1701 is further configured to determine that the M TRS bursts are configured non-uniformly according to the TRS configuration information.

In some implementations, the processor 1701 is further configured to determine that the M TRS bursts are configured non-uniformly within a TRS measurement window according to the TRS configuration information.

In some implementations, the processor 1701 is further configured to, according to the TRS configuration information, determine that the time interval between adjacent TRS bursts within each TRS period is identical, and a time interval between a last TRS resource in the TRS period and a first TRS resource in a next TRS period is configured in accordance with a set manner, in which the periodic TRS burst and/or the aperiodic TRS burst are included within the TRS period, and each the TRS burst includes a TRS resource.

In some implementations, the processor 1701 is further configured to determine grouping of M TRS bursts according to the TRS configuration information, and determine that time intervals for TRS bursts corresponding to different groups are different, and time intervals for TRS bursts within the same group are identical.

In some implementations, the processor 1701 is further configured to, according to the TRS configuration information, determine that time intervals for TRS bursts within the same TRS period are identical, and different TRS periods correspond to different time intervals, in which the periodic TRS burst and/or the aperiodic TRS burst are included within the TRS period.

In some implementations, the processor 1701 is further configured to determine that time intervals between adjacent TRS bursts within the same TRS period to be a time interval corresponding to the same TRS period, and configure a time interval between a last TRS resource in the same TRS period and a first TRS resource in a next TRS period in accordance with a set manner, in which each TRS burst includes a TRS resource.

In some implementations, the processor 1701 is further configured to:
determine a maximum number of TRS bursts allowed to be transmitted within the TRS period and a total number of time units included in the TRS period, in which the maximum number is a number of TRS bursts allowed to be transmitted within the TRS period under a corresponding set time interval; and
configure the time interval between the last TRS resource in the TRS period and the first TRS resource in the next TRS period according to the total number, the maximum number and a value of the time interval corresponding to the TRS period.

In some implementations, the processor 1701 is further configured to, according to the TRS configuring information, determine that one periodic TRS burst and/or a plurality of aperiodic TRS bursts are included within one TRS period, and the time intervals between adjacent TRS bursts are different.

In some implementations, the periodic TRS burst and the aperiodic TRS burst each include one time unit, one or two TRS resources are transmitted on each time unit, and the two TRS resources are spaced by a set number of OFDM symbols.

In some implementations, one of the periodic TRS burst and the aperiodic TRS includes one time unit, the other of the periodic TRS burst and the aperiodic TRS includes two time units, one or two TRS resources are transmitted on the time unit, and the two TRS resources are spaced by a set number of OFDM symbols.

In some implementations, the periodic TRS burst and the aperiodic TRS burst each include two time units, two TRS resources are transmitted on each time unit, and the two TRS resources are spaced by a set number of OFDM symbols.

In some implementations, the interface 1702 is further configured to transmit indication information to the network device. The indication information is used to indicate a parameter required for a TRS configuration, and the parameter includes at least one of: a time interval between TRS bursts, a number of time units occupied by a TRS measurement window, a starting point of the TRS measurement window, and a total number of TRS bursts within the TRS measurement window.

In some implementations, the interface 1702 is further configured to receive a first TRS burst for parameter measurement transmitted by the network device, and transmit the time domain channel property (TDCP) obtained based on the first TRS burst to the network device. The TDCP is used to determine the parameter, and the parameter includes at least one of: a time interval between TRS bursts, a number of time units occupied by a TRS measurement window, a starting point of the TRS measurement window, and a total number of TRS bursts within the TRS measurement window.

In some implementations, a time interval of at least one time unit existing between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

In some implementations, the interface 1702 is further configured to obtain a TDCP by performing a measurement based on the configured M TRS bursts, and report the TDCP to the network device.

Optionally, the chip further includes a memory 1703, and the memory 1703 is configured to store necessary computer programs and data.

In embodiments of the present application, the network device may set a reasonable periodic TRS burst and/or an aperiodic TRS burst for the terminal device, and set a certain time interval for adjacent TRS bursts. By reasonably configuring TRS resources for the terminal device, the terminal device may accurately determine TDCP based on the reasonably configured TRS resources. Moreover, setting a certain time interval between adjacent TRS bursts may reduce the overhead of TRS resources and improve the accuracy of TDCP measurement.

A person skilled in the art may also understand that the various illustrative logical blocks and steps set forth in the embodiments of the present application may be implemented by electronic hardware, computer software, or a combination of both. Whether such a function is realized in hardware or software depends on the specific application and the design requirements of the overall system. A person skilled in the art may, for each particular application, use a variety of methods to implement the functions, but such implementations should not be construed as being outside the scope of protection of the embodiments of the present application.

Embodiments of the present application also provide a system for configuring a TRS, the system includes a communication device as the network device and a communication device as the terminal device in the aforementioned embodiment of FIG. 15, or the system includes a communication device as the network device and a communication device as the terminal device in the aforementioned embodiment of FIG. 16.

The present application also provides a readable storage medium storing instructions, a computer executes the instructions to realize the functions of any of the above method embodiments.

The present application also provides a computer program product, and a computer executes the computer program product to realize the functions of any of the above method embodiments.

The above embodiments may be implemented in whole or in part by software, hardware, firmware, or any combination thereof. When implemented using software, it may be implemented in whole or in part as a computer program product. The computer program product includes one or more computer programs. Loading and executing a computer program on a computer produces, in whole or in part, a process or function in accordance with embodiments of the present application. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website site, computer, server, or data center to another website site, computer, server, or data center via wired (e.g., coaxial cable, fiber optics, digital subscriber line, DSL) or wireless (e.g., infrared, wireless, microwave, etc.) means. The computer readable storage medium may be any usable medium to which a computer has access or a data storage device such as a server, data center, etc., that contains one or more usable media integrated. The available media described may be magnetic media (e.g., floppy disk, hard disk, tape), optical media (e.g., high-density digital video disc (DVD)), or semiconductor media (e.g., solid state disk (SSD)) and the like.

A person skilled in the art may understand that the first, second and other numbers involved in the present application are only described for the convenience of distinction, and are not used to limit the scope of the embodiments of the present application, but also indicate the order of precedence.

The at least one of the present application may also be described as one or more, and the plurality may be two, three, four, or more, without limitation of the present application. In embodiments of the present application, for a type of technical feature, the technical features in the type of technical feature are distinguished by "first", "second", "third", "A", "B", "C" and "D", etc., the technical features described by the "first", "second", "third", "A", "B", "C", and "D", are in no order of priority or size.

The correspondences shown in the tables in the present application can be configured or can be predefined. The values of the information in the tables are merely examples and may be configured to other values, which are not limited by the present application. When configuring the correspondence between the information and each parameter, it is not necessary to configure all the correspondences illustrated in each table. For example, the correspondence illustrated in certain rows in the tables in the present application may also not be configured. As another example, appropriate distortion adjustments may be made based on the above table, e.g., splitting, merging, etc. The names of the parameters shown in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chain table, tree, graph, structure, class, heap, or hash table may be used.

Predefined in the present application may be understood as defined, pre-defined, stored, pre-stored, pre-negotiated, pre-configured, solidified, or pre-fired.

A person skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A person skilled in the art may use different methods for each particular application to achieve the described functionality, but such implementations should not be considered outside the scope of the present application.

It is clearly understood by those skilled in the field to which it belongs that, for the convenience and brevity of the description, for the specific working processes of the above-described systems, apparatuses, and units reference can be made to the corresponding processes in the foregoing embodiments of the method, and details will not be repeated herein.

The above-described are merely specific implementations of the present application, but the protection scope of the present application is not limited to this. The conceivable change or alternative by those skilled in the art within the technical scope disclosed by the present application should be covered in the protection scope of the present application. Therefore, the protection scope of the present application is subject to the protection scope of the claims.

## Claims

1. A method for configuring a tracking reference signal (TRS), performed by a network device, comprising:
transmitting TRS configuration information to a terminal device, wherein the TRS configuration information is used to indicate configured M TRS bursts, the M TRS bursts comprise a periodic TRS burst and/or an aperiodic TRS burst, a time interval of at least one time unit exists between adjacent TRS bursts, and M is an integer greater than or equal to 2.

2. The method according to claim 1, wherein transmitting the TRS configuration information to the terminal device comprises:
configuring time intervals for the M TRS bursts to be identical, and generating the TRS configuration information; and
transmitting the TRS configuration information to the terminal device.

3. The method according to claim 1, wherein transmitting the TRS configuration information to the terminal device comprises:
configuring the M TRS bursts non-uniformly, and generating the TRS configuration information; and
transmitting the TRS configuration information to the terminal device.

4. The method according to claim 3, wherein configuring the M TRS bursts non-uniformly comprises:
configuring the M TRS bursts non-uniformly within a TRS measurement window.

5. The method according to claim 3, wherein configuring the M TRS bursts non-uniformly comprises:
configuring the time interval between adjacent TRS bursts within each TRS period to be identical, and configuring a time interval between a last TRS resource in the TRS period and a first TRS resource in a next TRS period in accordance with a set manner, wherein the periodic TRS burst and/or the aperiodic TRS burst are comprised within the TRS period, and the TRS burst comprise a TRS resource.

6. The method according to claim 3, wherein configuring the M TRS bursts non-uniformly comprises:
grouping the M TRS bursts; and
configuring time intervals for TRS bursts corresponding to different groups to be different, and configuring time intervals for TRS bursts within the same group to be identical.

7. The method according to claim 3, wherein configuring the M TRS bursts non-uniformly comprises:
configuring time intervals for TRS bursts within the same TRS period to be identical, and configuring different TRS periods to correspond to different time intervals, wherein the periodic TRS burst and/or the aperiodic TRS burst are comprised within the TRS period.

8. The method according to claim 7, wherein configuring time intervals for TRS bursts within the same TRS period to be identical comprises:
configuring time intervals between adjacent TRS bursts within the same TRS period to be a time interval of the same TRS period, and configuring a time interval between a last TRS resource in the same TRS period and a first TRS resource in a next TRS period in accordance with a set manner, wherein each TRS burst comprises a TRS resource.

9. The method according to claim 5 or 8, wherein configuring in accordance with the set manner comprises:
determining a maximum number of TRS bursts allowed to be transmitted within the TRS period and a total number of time units comprised in the TRS period, wherein the maximum number is a number of TRS bursts allowed to be transmitted within the TRS period under a corresponding set time interval; and
configuring the time interval between the last TRS resource in the TRS period and the first TRS resource in the next TRS period according to the total number, the maximum number and the time interval corresponding to the TRS period.

10. The method according to claim 3, wherein configuring the M TRS bursts non-uniformly comprises:
configuring one periodic TRS burst and/or a plurality of aperiodic TRS bursts being comprised within one TRS period, and configuring the time intervals between adjacent TRS bursts to be identical or different.

11. The method according to claim 1, wherein the periodic TRS burst and the aperiodic TRS burst each comprise one time unit, one or two TRS resources are transmitted on each time unit, and the two TRS resources are spaced by a set number of orthogonal frequency division multiplexing (OFDM) symbols.

12. The method according to claim 1, wherein one of the periodic TRS burst and the aperiodic TRS comprises one time unit, the other of the periodic TRS burst and the aperiodic TRS comprises two time units, one or two TRS resources are transmitted on each time unit, and the two TRS resources are spaced by a set number of OFDM symbols.

13. The method according to claim 1, wherein the periodic TRS burst and the aperiodic TRS burst each comprise two time units, two TRS resources are transmitted on each time unit, and the two TRS resources are spaced by a set number of OFDM symbols.

14. The method according to claim 1, wherein before transmitting the TRS configuration information to the terminal device, the method further comprises:
determining a parameter required for a TRS configuration and performing the TRS configuration according to the parameter,
wherein the parameter comprises at least one of: a time interval between TRS bursts, a number of time units occupied by a TRS measurement window, a starting point of the TRS measurement window, and a total number of TRS bursts within the TRS measurement window.

15. The method according to claim 14, wherein a determining manner for the parameter required for the TRS configuration comprises one of:
determined by the network device;
receiving indication information transmitted by the terminal device, wherein the indication information is used to indicate the parameter;
one part of the parameters being determined by the network device, and the other part of the parameters being indicated by the terminal device; or
transmitting a first TRS burst for parameter measurement to the terminal device, receiving a time domain channel property (TDCP) reported by the terminal device based on the first TRS burst, and determining the parameter according to the TDCP.

16. The method according to claim 1, wherein the time interval of at least one time unit existing between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

17. A method for configuring a tracking reference signal (TRS), performed by a terminal device, comprising:
receiving TRS configuration information transmitted by a network device; and
determining M TRS bursts according to the TRS configuration information, wherein the M TRS bursts comprise a periodic TRS burst and/or an aperiodic TRS burst, a time interval of at least one time unit exists between adjacent TRS bursts, and M is an integer greater than or equal to 2.

18. The method according to claim 17, wherein determining the M TRS bursts according to the TRS configuration information comprises:
determining that time intervals for the M TRS bursts are identical according to the TRS configuration information, wherein the time interval for the TRS bursts is network-configured or protocol-agreed.

19. The method according to claim 17, wherein determining the M TRS bursts according to the TRS configuration information comprises:
determining that the M TRS bursts are configured non-uniformly according to the TRS configuration information.

20. The method according to claim 19, wherein determining that the M TRS bursts are configured non-uniformly according to the TRS configuration information comprises:
determining that the M TRS bursts are configured non-uniformly within a TRS measurement window according to the TRS configuration information.

21. The method according to claim 19, wherein determining that the M TRS bursts are configured non-uniformly according to the TRS configuration information comprises:
according to the TRS configuration information, determining that the time interval between adjacent TRS bursts within each TRS period is identical, and a time interval between a last TRS resource in the TRS period and a first TRS resource in a next TRS period is configured in accordance with a set manner, wherein the periodic TRS burst and/or the aperiodic TRS burst are comprised within the TRS period, and the TRS burst comprise a TRS resource.

22. The method according to claim 19, wherein determining that the M TRS bursts are configured non-uniformly according to the TRS configuration information comprises:
determining grouping of the M TRS bursts according to the TRS configuration information; and
determining that time intervals for TRS bursts corresponding to different groups are different, and time intervals for TRS bursts within the same group are identical.

23. The method according to claim 19, wherein determining that the M TRS bursts are configured non-uniformly according to the TRS configuration information comprises:
according to the TRS configuration information, determining that time intervals for TRS bursts within the same TRS period are identical, and different TRS periods correspond to different time intervals, wherein the periodic TRS burst and/or the aperiodic TRS burst are comprised within the TRS period.

24. The method according to claim 23, comprising:
determining that time intervals between adjacent TRS bursts within the same TRS period are a time interval corresponding to the same TRS period; and
determining a time interval between a last TRS resource in the same TRS period and a first TRS resource in a next TRS period in accordance with a set manner, wherein each TRS burst comprises a TRS resource.

25. The method according to claim 21 or 24, wherein determining the time interval between the last TRS resource in the TRS period and the first TRS resource in the next TRS period in accordance with the set manner comprises:
determining a maximum number of TRS bursts allowed to be transmitted within the TRS period and a total number of time units comprised in the TRS period, wherein the maximum number is a number of TRS bursts allowed to be transmitted within the TRS period under a corresponding set time interval; and
configuring the time interval between the last TRS resource and the first TRS resource according to the total number, the maximum number and the time interval corresponding to the TRS period.

26. The method according to claim 19, wherein determining that the M TRS bursts are configured non-uniformly according to the TRS configuration information comprises:
according to the TRS configuring information, determining that one periodic TRS burst and/or a plurality of aperiodic TRS bursts are comprised within one TRS period, and the time intervals between adjacent TRS bursts are different.

27. The method according to claim 17, wherein the periodic TRS burst and the aperiodic TRS burst each comprise one time unit, one or two TRS resources are transmitted on each time unit, and the two TRS resources are spaced by a set number of OFDM symbols.

28. The method according to claim 17, wherein one of the periodic TRS burst and the aperiodic TRS comprises one time unit, the other of the periodic TRS burst and the aperiodic TRS comprises two time units, one or two TRS resources are transmitted on each time unit, and the two TRS resources are spaced by a set number of OFDM symbols.

29. The method according to claim 17, wherein the periodic TRS burst and the aperiodic TRS burst each comprise two time units, two TRS resources are transmitted on each time unit, and the two TRS resources are spaced by a set number of OFDM symbols.

30. The method according to claim 17, wherein before receiving the TRS configuration information transmitted by the network device, the method further comprises:
transmitting indication information to the network device, wherein the indication information is used to indicate a parameter required for a TRS configuration,
wherein the parameter comprises at least one of: a time interval between TRS bursts, a number of time units occupied by a TRS measurement window, a starting point of the TRS measurement window, and a total number of TRS bursts within the TRS measurement window.

31. The method according to claim 17, wherein before receiving the TRS configuration information transmitted by the network device, the method further comprises:
receiving a first TRS burst for parameter measurement transmitted by the network device; and
transmitting a time domain channel property (TDCP) obtained based on the first TRS burst to the network device, the TDCP being used to determine the parameter,
wherein the parameter comprises at least one of: a time interval between TRS bursts, a number of time units occupied by a TRS measurement window, a starting point of the TRS measurement window, and a total number of TRS bursts within the TRS measurement window.

32. The method according to claim 17, wherein the time interval of at least one time unit existing between adjacent TRS bursts is an interval between a first slot corresponding to previous one or two TRS resources in a TRS resource set of a previous TRS burst and a first slot corresponding to previous one or two TRS resources in a TRS resource set of a next TRS burst.

33. The method according to claim 17, wherein after determining the M TRS bursts according to the TRS configuration information, the method further comprises:
obtaining a TDCP by performing a measurement based on the configured M TRS bursts, and reporting the TDCP to the network device.

34. A communication device, comprising:
a transceiver module, configured to transmit TRS configuration information to a terminal device, wherein the TRS configuration information is used to indicate configured M TRS bursts, the M TRS bursts comprise a periodic TRS burst and/or an aperiodic TRS burst, a time interval of at least one time unit exists between adjacent TRS bursts, and M is an integer greater than or equal to 2.

35. A communication device, comprising:
a transceiver module, configured to receive TRS configuration information transmitted by a network device; and
a processing module, configured to determine M TRS bursts according to the TRS configuration information, wherein the M TRS bursts comprise a periodic TRS burst and/or an aperiodic TRS burst, a time interval of at least one time unit exists between adjacent TRS bursts, and M is an integer greater than or equal to 2.

36. A communication device, comprising: a processor, and a memory storing a computer program, wherein the processor executes the computer program stored in the memory to cause the communication device to perform the method according to any one of claims 1 to 16.

37. A communication device, comprising: a processor, and a memory storing a computer program, wherein the processor executes the computer program stored in the memory to cause the communication device to perform the method according to any one of claims 17 to 33.

38. A communication device, comprising a processor and an interface circuit, wherein:
the interface circuit is configured to receive code instructions and transmit the code instructions to the processor; and
the processor is configured to run the code instructions to perform the method according to any one of claims 1 to 16.

39. A communication device, comprising a processor and an interface circuit, wherein:
the interface circuit is configured to receive code instructions and transmit the code instructions to the processor; and
the processor is configured to run the code instructions to perform the method according to any one of claims 17 to 33.

40. A computer-readable storage medium configured to store instructions, wherein the instructions are executed to implement the method according to any one of claims 1 to 16.

41. A computer-readable storage medium configured to store instructions, wherein the instructions are executed to implement the method according to any one of claims 17 to 33.
